# EUROPÄISCHE PATENTANMELDUNG

(11) **EP 3 950 213 A1**
(43) Veröffentlichungstag der Anmeldung: **09.02.2022**
(21) Anmeldenummer: 21188522.3
(22) Anmeldetag: 29.07.2021
(51) Int. Cl.: B23P 19/00, B21J 15/32, B23P 19/06, B25B 23/10

(54) **VERARBEITUNGSWERKZEUG SOWIE FÜHRUNGSELEMENT ZUM ÜBERFÜHREN EINES BAUTEILS AUS EINER BEREITSTELLUNGSPOSITION IN EINE VERARBEITUNGSPOSITION**

(30) Priorität: 03.08.2020 DE 102020209745
(71) Anmelder: Richard Bergner Holding GmbH & Co. KG, 91126 Schwabach (DE)
(72) Erfinder: DEHLKE, Klaus, 91575 Windsbach (DE); VOH, Markus, 91126 Schwabach (DE)
(74) Vertreter: FDST Patentanwälte

(57) **Zusammenfassung**

Das Verarbeitungswerkzeug (2) dient zum Überführen eines Bauteils (M), insbesondere eines Fügeelements aus einer Bereitstellungsposition (16) in eine Verarbeitungsposition (20). Für eine prozesssichere Führung ist ein in einem Niederhalter (12) gehaltenes Führungselement (14) angeordnet, durch das das Bauteil (M) im Betrieb durchgepresst wird und welches eine elastische Haltekraft ausübt. Das Führungselement (14) weist dabei eine insbesondere metallische Hülse auf, die eine Führungsstruktur (22) aus einem Elastomer aufweist. Die Führungsstruktur (22) ist dabei insbesondere durch einen elastomeren Ring (28) oder durch mehrere axiale Führungsleisten (30) gebildet.

## Beschreibung

Die Erfindung betrifft ein Verarbeitungswerkzeug zum Überführen eines Bauteils aus einer Bereitstellungsposition in eine Verarbeitungsposition, insbesondere zum Einpressen eines Einpresselements in ein Werkstück mit den Merkmalen des Oberbegriffs des Anspruchs 1. Die Erfindung betrifft weiterhin ein Führungselement für ein derartiges Verarbeitungswerkzeug.

Ein derartiges Verarbeitungswerkzeug ist beispielsweise aus der DE 10 2008 033 933 A1 zu entnehmen.

Bei dem Einbringen von Bauteilen in Werkstücken, insbesondere Blechen, ist regelmäßig eine genaue Führung der Bauteile beim Bearbeitungsvorgang erforderlich.

Insbesondere bei Verarbeitungswerkzeugen und Verfahren, bei denen das Bauteil mit Hilfe eines Umformvorgangs form- und/oder kraftschlüssig eingebracht wird, ist für eine qualitativ hochwertige Verbindung zwischen dem Bauteil und dem Werkstück ein definiertes Einbringen des Bauteils in das Werkstück erforderlich. Dies gilt insbesondere bei solchen Verfahren, bei denen die Bauteile mit Hilfe eines Einpresswerkzeugs in das Werkstück eingebracht werden. Bei den Bauteilen handelt es sich hierbei insbesondere um Stanz- oder Einpresselemente, die bei ihrem Einpressen selbst umgeformt werden und/oder die bei ihrem Einpressen das Werkstück umformen. Bei dem Einpressvorgang werden diese Bauteile oftmals gegen eine Matrize als Gegenhaltelement gepresst. Für die Umformung ist dabei eine möglichst genaue Ausrichtung und Führung des Bauteils in Bezug auf diese Matrize erforderlich.

Unter Bauteilen werden hierbei insbesondere so genannte Einpresselemente, speziell Einpressmuttern verstanden, also Fügeelemente, die durch Verpressen in ein vorgelochtes Blech eingebracht werden, und die ein Gewindeloch mit Gewinde zur Befestigung einer Schraube aufweisen. Gleiches gilt für Stanzmuttern, die durch einen Stanzvorgang in ein nicht vorgelochtes Blech eingebracht werden. Neben den Muttern können auch so genannte Einpressbolzen oder sonstige Fügeelemente vorgesehen sein. Die Einpressbolzen weisen üblicherweise einen Bolzenkopf sowie häufig in der Ausgestaltung als Schraube ein Außengewinde auf.

Diese Bauteile werden heutzutage, insbesondere im Bereich der Automobilindustrie automatisiert dem Verarbeitungswerkzeug zugeführt. Bei der Verarbeitung werden die Bauteile typischerweise aus einem Magazin oder Vorrat vereinzelt dem Verarbeitungswerkzeug in eine Bereitstellungsposition zugeführt. Aus dieser Bereitstellungsposition heraus wird das Bauteil in eine Verarbeitungsposition gebracht, bevor der eigentliche Setzvorgang erfolgt, bei dem das Bauteil in das Blech eingebracht wird. In der Verarbeitungsposition liegt das Bauteil beispielsweise am Blech und/oder der Matrize an, bevor der Setz- und/ oder Umformvorgang beginnt. Sowohl die Überführung von der Bereitstellungsposition in die Verarbeitungsposition als auch das eigentliche Einpressen erfolgt hierbei typischerweise mit Hilfe eines Einpressstempels. Zur genauen Führung der Bauteile können beispielsweise Greifer vorgesehen sein, die das Fügeelement in der auch als Übergabeposition bezeichneten Bereitstellungsposition klemmend halten.

Beim Bearbeitungsvorgang verfährt das Verarbeitungswerkzeug üblicherweise gegen das Werkstück und drückt dies mit dem Fügeelement oder mit Hilfe eines sogenannten Niederhalters gegen eine Auflage (Matrize). Das Bauteil selbst wird hierbei durch den Niederhalter hindurch aus der Bereitstellungsposition in die Verarbeitungsposition geführt.

Für eine zuverlässige Führung des Bauteils von der Bereitstellungsposition in die Verarbeitungsposition ist aus der DE 10 2008 033 933 A1 eine im Niederhalter angeordnete geschlitzte Führungshülse aus einem elastischen Material vorgesehen. Einzelne Federlaschen der geschlitzten Führungshülse üben auf das Bauteil eine elastische Haltekraft aus, während das Bauteil durch die Führungshülse hindurch geschoben wird.

Bei automatisierten Anlagen, wie sie beispielsweise in Produktionsanlagen eingesetzt werden und bei denen das Einpressen der Einpresselemente vollautomatisch erfolgt, ist eine prozesssichere Ausgestaltung entscheidend. Die Führungselemente müssen dabei insbesondere möglichst verschleißfest und gleichzeitig elastisch sein.

Dies wird bei der DE 10 2008 033 933 A1 durch die Verwendung eines hochwertigen Federstahls für die geschlitzte Hülse erreicht. Allerdings ist die Herstellung einer solchen Führungshülse aufwändig und teuer.

Der Erfindung liegt die Aufgabe zugrunde, eine prozesssichere Führung eines derartigen Bauteils von einer Bereitstellungsposition in eine Verarbeitungsposition in einem Verarbeitungswerkzeug durch Einsatz einer verschleißbeständigen, kostengünstigen und einfach herzustellenden Führungshülse zu gewährleisten.

Die Aufgabe wird gemäß der Erfindung gelöst durch ein Verarbeitungswerkzeug zum Überführen eines Bauteils aus der Bereitstellungsposition in die Verarbeitungsposition. Bei dem Verarbeitungswerkzeug handelt es sich insbesondere um ein automatisiertes Werkzeug, welches zum (voll-) automatischen Einpressen der vorzugsweise als Einpresselemente ausgebildeten Bauteile vorgesehen ist. Das Verarbeitungswerkzeug weist einen Stempel auf, der das Bauteil von der Bereitstellungsposition in die Verarbeitungsposition überführt. Das Verarbeitungswerkzeug weist weiterhin vorzugsweise einen endseitig angeordneten und sich in einer Axialrichtung erstreckenden Niederhalter auf. Dieser wird beim Bearbeitungsvorgang typischerweise gegen eine Oberfläche eines Werkstücks gepresst. Weiterhin ist ein hülsenförmiges Führungselement ausgebildet, welches vorzugsweise Teil des Niederhalters ist oder vorzugsweise als ein zusätzliches Element innerhalb des Niederhalters angeordnet ist. Das Bauteil wird bei einem jeweiligen Setzvorgang durch das Führungselement hindurch von der Bereitstellungsposition in die Verarbeitungsposition geführt. Das Führungselement ist derart ausgebildet, dass es zumindest über einen Teilbereich eine elastische Haltekraft auf das Bauteil ausübt. Hierzu weist das Führungselement eine elastische Führungsstruktur auf. Das Führungselement, insbesondere die Führungsstruktur sind derart ausgebildet, dass beim Verarbeitungsvorgang der Stempel das Bauteil entgegen der elastischen Haltekraft durch das Führungselement, speziell durch die Führungsstruktur hindurchpresst. Das Führungselement weist dabei eine Hülse auf, in der die Führungsstruktur aus einem Elastomer angeordnet und befestigt ist. Die Hülse weist dabei eine höhere Steifigkeit als die Führungsstruktur auf und ist beispielsweise eine Metall- oder Stahlhülse. Bei dem Elastomer handelt es sich beispielsweise um ein thermoplastisches Elastomer (TPE) oder um einen Gummi.

Das Bauteil ist hierbei insbesondere ein Einpress-Fügeelement, wie eine Stanz- oder Einpressmutter oder auch ein Einpressbolzen. Nachfolgend wird ohne Beschränkung der Allgemeinheit auf ein Fügeelement als das Bauteil Bezug genommen.

Die Führung des Bauteils, also des Fügeelements und die Ausübung einer elastischen Haltekraft auf das Fügeelement erfolgt in einfacher Weise mithilfe der elastischen Führungsstruktur. Die Länge der Führungsstruktur aus dem elastischen Material ist dabei in einer Ausführungsvariante typischerweise größer als die Länge des Bauteils in Axialrichtung, also in Fügerichtung, in der das Bauteil durch das Führungselement und damit auch durch den Niederhalter hindurch in die Bearbeitungsposition gepresst wird. Ist das Bauteil ein Bolzen so ist die Länge der Führungsstruktur größer als die Länge eines Kopfes des Bolzens. Ein Bolzen weist üblicherweise einen beispielsweise mit einem Außengewinde versehenen Schaft sowie einen verbreiterten Kopf auf, mit dem der Bolzen auf einer Seite des Werkstücks im gesetzten Zustand aufliegt.

Gleichzeitig definiert die Führungsstruktur ein (minimales) Innenmaß, speziell einen Innendurchmesser, welcher geringer als ein (maximales) Außenmaß des Bauteils ist, so dass das Bauteil durch die von der Führungsstruktur ausgeübte elastische Kraft gehalten und geführt wird.

Gemäß einer ersten Ausführungsvariante ist dabei die Führungsstruktur derart ausgebildet, dass sie über ihre gesamte Länge an einer Innenwandung der Hülse unmittelbar oder mittelbar unter Zwischenlage eines weiteren Bauteils, beispielsweise eine Montagehülse, anliegt. Sie ist dabei insbesondere stoffschlüssig und/oder reibschlüssig und/oder formschlüssig befestigt. Zum stoffschlüssigen Befestigen wird die Führungsstruktur an der Hülse oder an dem zusätzlichen Bauteil angeklebt oder anvulkanisiert. Die Führungsstruktur weist insbesondere keine schwenk- oder biegebeweglichen Bereiche auf. Speziell keine derartigen Bereiche, die beim Durchpressen des Bauteils beim Pressvorgang radial ausweichen. Vielmehr wird die elastische Führungsstruktur in radialer Richtung vorzugsweise lediglich komprimiert.

Die Führungsstruktur ist beispielsweise als ein Rohr oder Schlauch ausgebildet, welches beispielsweise ungeschlitzt ist. Das Rohr weist über seine gesamte Länge bevorzugt eine gleichbleibende Querschnittsgeometrie auf, insbesondere eine hohlzylindrische Geometrie. Ein derartiges elastisches Rohr zeichnet sich durch eine einfache und damit kostengünstige Ausgestaltung aus. Es lässt sich kostengünstig beispielsweise aus einem Halbzeug, wie beispielsweise einem Schlauch, herstellen und braucht dann lediglich noch auf eine gewünschte Länge abgelängt zu werden.

Das Befestigen des Elastomers an der insbesondere metallische Hülse ist mit montagetechnischem Aufwand verbunden. Um diesen gering zu halten und gleichzeitig eine zuverlässige und dauerhaft prozesssichere Befestigung der Führungsstruktur zu erzielen ist in einer zweckdienlichen Ausgestaltung vorgesehen, dass die Führungsstruktur eine Anzahl von streifenförmigen Elementen aufweist, also ein oder mehrere streifenförmige Elemente aufweist und insbesondere durch diese Anzahl an streifenförmigen Elementen gebildet ist. Mehrere solcher streifenförmiger Elemente erstrecken sich gemäß einer ersten Variante nach Art von Führungsleisten in Axialrichtung. Gemäß einer zweiten Variante erstreckt sich zumindest ein solches streifenförmiges Element nach Art eines Ringes in einer Umfangsrichtung. Bei der Ausgestaltung als Leisten sind mehrere derartiger Leisten um den Umfang verteilt angeordnet. Bei einer ringförmigen Ausgestaltung ist vorzugsweise lediglich ein einziges ringförmiges Element vorgesehen. Das ringförmige Element ist dabei wahlweise als geschlossener Ring und insbesondere als geschlitzter Ring ausgebildet, welcher also nicht vollständig geschlossen ist. Darüber hinaus ist in einer Variante vorgesehen, dass in Umfangsrichtung und damit auf gleicher axialen Höhe mehrere Ringsegmente insbesondere gleichverteilt um den Umfang angeordnet sind. Jedes dieser Ringsegmente bildet insofern ein streifenförmiges Element aus.

Für beide Varianten sind in bevorzugten Ausgestaltungen an der Innenwandung ein oder mehrere Nuten, also insbesondere entweder Längsnuten oder eine Ringnut ausgebildet, die zur Aufnahme der Führungsleisten oder des ringförmigen Elements ausgebildet sind. Bei der Ausgestaltung mit einzelnen Ringsegmenten ist wahlweise eine Ringnut vorgesehen, in der die Ringsegmente verteilt angeordnet sind oder es sind um den Umfang verteilt einzelne Vertiefungen ausgebildet, in denen jeweils ein Ringsegment einliegt.

In einer bevorzugten Weiterbildung ist die Führungsstruktur auf eine Montagehülse aufgebracht, die zwischen der Führungsstruktur und der Hülse einliegt und die insbesondere aus Kunststoff besteht. Die Montagehülse weist dabei allgemein eine höhere Härte als die Führungsstruktur auf und vorzugsweise gleichzeitig eine geringere Härte als die Hülse. Über die Montagehülse ist die Führungsstruktur mittelbar an der Hülse befestigt.

Die Montagehülse ist beispielsweise als ein Rohr mit ringförmigen Querschnitt ausgebildet und weist beispielsweise eine durchgehende Wandung auf. Alternativ hierzu ist Montagehülse in Axialrichtung mit ein oder mehreren Schlitzen versehen, ist daher geschlitzt ausgebildet. Die Innenwandung der Montagehülse ist bevorzugt zylindrisch ausgebildet, und die Führungsstruktur liegt an dieser zylindrischen Fläche an. Alternativ hierzu sind in die Montagehülse ein oder mehrere Nuten eingebracht, also Längsnuten oder eine Ringnut, in denen die streifenförmigen Elemente einliegen.

Der besondere Vorteil dieser Montagehülse ist darin zu sehen, dass sie als eine Montageeinheit zusammen mit der darin befestigten Führungsstruktur ausgebildet und als ein Verschleiß- und Austauschteil vorgesehen sein kann. Im Falle eines betriebsbedingten Verschleißes kann daher in einfacher Weise durch Austausch dieser Montageeinheit ein einfacher Austausch erfolgen.

Zweckdienlicherweise ist die Montagehülse in die Hülse eingepresst, d. h. es handelt sich um eine Einpresshülse. Diese weist daher einen Außendurchmesser auf, welcher ein gewisses Übermaß im Vergleich zu einem Innendurchmesser der Hülse aufweist.

In einer besonders bevorzugten Ausgestaltung weist die Hülse oder auch die Montagehülse endseitig zumindest einen Absatz auf, an dem sich die Führungsleisten abstützen. Durch diese Maßnahme ist daher ein in Axialrichtung wirksamen Formschluss gebildet. Hierdurch werden die beim Durchpressen des Fügeelements auftretenden Kräfte in Axialrichtung zuverlässig abgefangen.

Bei der Ausgestaltung mit den Führungsleisten sind vorzugsweise lediglich 3-6 und beispielsweise lediglich 3 oder 4 Führungsleisten vorgesehen. Die Führungsleisten erstrecken sich weiterhin vorzugsweise lediglich über einen geringen Winkelbereich von beispielsweise 5°-20°, insbesondere lediglich im Bereich von 5°-10°.

Bevorzugt sind die Führungsleisten im Querschnitt rechteckförmig, oval oder auch kreisrund ausgebildet. Sie lassen sich daher in einfacher Weise fertigen. Da sie in der bevorzugten Ausgestaltung lediglich einen geringen Winkelbereich überstreichen, sind sie vorzugsweise gerade nicht - im Querschnitt betrachtet - als ein Kreisring-Segment ausgebildet, d. h. ihre Innenseite sowie ihre Außenseite sind gerade nicht durch konzentrische Kreise oder Kreissegmente gebildet.

Alternativ zu den Führungsleisten ist die Führungsstruktur als ein Rohr ausgebildet, welches insbesondere nach Art eines Hohlzylinders mit zueinander konzentrischer Innenwandung und Außenwandung ausgebildet ist. In bevorzugter Ausgestaltung erstreckt sich dabei das Rohr nur über eine geringe Länge in Axialrichtung, beispielsweise lediglich über maximal 10%, 25% oder 1/3 der Länge der Hülse, sodass das Rohr als ein Ring ausgebildet ist. Die Länge des Rings in Axialrichtung liegt dabei beispielsweise im Bereich der axialen Länge des Bauteils, beispielsweise im Bereich der 0,5 bis 4-fachen, insbesondere im Bereich der 1 bis 2-fachen axialen Länge des Bauteils. Dies ist im Falle einer Mutter die axiale Länge der Mutter und im Falle eines Bolzens mit einem Kopf die axiale Länge eines Kopfes.

Alternativ zu diesem ringförmigen Element, welches sich nur über eine kurze axiale Länge erstreckt, erstreckt sich das Rohr über einen Großteil der Länge der Hülse, beispielsweise über mehr als 75 % und vorzugsweise über die gesamte Länge der Hülse.

Gemäß einer bevorzugten Ausführungsvariante ist die als (langgestrecktes) Rohr oder Ring ausgebildete Führungsstruktur in Axialrichtung geschlitzt ausgebildet. Dabei können ein oder mehrere um den Umfang verteilte Schlitze angeordnet sein. In einem oberen oder unteren Bereich ist im Fall eines langgestreckten Rohres bevorzugt eine umlaufende, durchgehende Wandung ausgebildet, sodass das Rohr insgesamt einteilig ausgebildet ist. Alternativ zur geschlitzten Variante ist eine ungeschlitzte, zylindrische Variante vorgesehen.

In einer weiterhin alternativen Ausführungsvariante weist das Rohr mehrere in Umfangsrichtung voneinander getrennte Rohrsegmente oder Ringsegmente auf. In diesem Fall handelt es sich insbesondere um einzelne Teile, die nicht zusammen hängen. Beispielsweise sind insgesamt 2-5 und insbesondere 2 oder 3 derartiger Rohrsegmente vorgesehen. Durch die Segmentierung ist die Montage vereinfacht. Diese Ausführungsvariante mit den mehreren Rohrsegmenten gilt in gleicher Weise für das ringförmige Element. Die einzelnen Rohrsegmente sind jeweils im Querschnitt betrachtet als Kreisring-Segmente ausgebildet. Die Trennschlitze zwischen den einzelnen Segmenten überstreicht jeweils nur einen geringen Winkelbereich, sodass beispielsweise die Rohrsegmente insgesamt zumindest 300° in Umfangsrichtung überdecken.

In einer besonders bevorzugten Ausführungsvariante erstreckt sich das Rohr und damit allgemein die Führungsstruktur nur über einen axialen Teilbereich der Hülse und ist bevorzugt ringförmig ausgebildet. Insbesondere ist die Führungsstruktur als ein geschlitzter oder segmentierter Ring oder auch als ein geschlossener Ring ausgebildet. Bei einem segmentierten Ring ist der Ring durch mehrere Ringsegmente gebildet, die in Umfangsrichtung zueinander beabstandet sind.

In bevorzugter Weiterbildung liegt der Ring in einer Ringnut ein, die bevorzugt in einem unteren Teilbereich der Hülse ausgebildet ist. Die Ringnut ist bevorzugt unmittelbar an der Innenwandung der Hülse oder alternativ auch an der Montagehülse ausgebildet. Alternativ oder ergänzend ist der Ring und insbesondere auch die Ringnut bevorzugt im unteren Drittel bzw. im unteren Viertel der Hülse bzw. der Montagehülse ausgebildet.

Speziell bei der Ausführungsvariante mit den Führungsleisten aber auch bei der Ausgestaltung der Führungsstruktur als Rohr erstreckt sich die Führungsstruktur in einigen Ausführungsvarianten zumindest über einen Großteil der Länge der Hülse, speziell beispielsweise über zumindest ¾ der Länge der Hülse. In einigen Ausführungsvarianten erstreckt sich die Führungsstruktur über die gesamte Länge der Hülse. Sie beginnt bevorzugt allgemein am oberen Rand der Hülse.

Alternativ hierzu erstreckt sich die Führungsstruktur, speziell bei der ringförmigen Ausgestaltung, lediglich über einen kurzen Bereich der Länge der Hülse und weist beispielsweise lediglich eine Länge kleiner 1/3 oder % der Länge der Hülse auf. Die Ausgestaltung mit der ringförmigen Führungsstruktur ist auch durch die zuvor beschriebene Ausgestaltung mit dem zumindest einen streifenförmigen Element in Umfangsrichtung gebildet.

In diesem Fall ist die Führungsstruktur dabei vorzugsweise in der unteren Hälfte der Hülse, insbesondere im unteren Drittel angeordnet.

In zweckdienlicher Ausgestaltung ist weiterhin allgemein ein Absatz ausgebildet, an dem die Führungsstruktur anliegt. Gemäß einer ersten Ausführungsvariante ist dieser Absatz als eine einfache Stufe ausgebildet. Die Stufe ist dabei insbesondere unmittelbar in die Innenwandung der Hülse eingebracht oder alternativ auch in die Innenwandung der Montagehülse. Im Bereich der Stufe erfolgt daher eine Verbreiterung oder auch Verringerung des Innenmaßes, insbesondere des Innendurchmessers der Hülse (Montagehülse). Gemäß einer Variante ist der Absatz von unten entgegen der Axialrichtung eingebracht, sodass also die Führungsstruktur von unten eingeschoben werden kann. Dies erlaubt eine einfache Montage.

Die umgekehrte Variante ist die bevorzugte Variante, wonach der Absatz bzw. die Stufe in Axialrichtung ausgebildet ist, sodass also eine Reduzierung des Innendurchmessers in Axialrichtung erfolgt und in Axialrichtung die Führungsstruktur formschlüssig an der Stufe anliegt. Beim Durchpressen des Bauteils durch die Führungsstruktur werden daher die Axialkräfte über den Absatz mit aufgenommen.

Um ein gutes Einführen des Bauteils in die Führungsstruktur zu gewährleisten, weist diese an ihrem oberen, entgegen der Axialrichtung orientierten Ende eine Einführschräge auf. Im Falle der mehreren um den Umfang verteilt angeordneten Führungsleisten weist die Führungsleiste eine solche Einführschräge auf.

In bevorzugter Ausgestaltung ist im Bereich der Hülse ein Sensor angeordnet, der insbesondere in der Wandung der Hülse angeordnet ist und der zur Detektion eines in der Hülse befindlichen Bauteils ausgebildet ist. Der Sensor ist dabei bevorzugt in einer unteren Hälfte, insbesondere einem unteren Drittel der Hülse angeordnet, bzw. zur Detektion eines in der unteren Hälfte oder des unteren Drittels befindlichen Bauteils ausgebildet.

Die Anordnung des Sensors im Bereich der Hülse wird insbesondere mit der Ausgestaltung der als Ring ausgebildeten Führungsstruktur kombiniert, wobei der Ring insbesondere im unteren Teilbereich der Hülse speziell in einer Ringnut einliegt. Der Sensor ist bei dieser Ausführungsvariante oberhalb des Rings positioniert, vorzugsweise unmittelbar oberhalb. Hierdurch wird durch den Sensor detektiert, ob im Betrieb das jeweils für den Setzvorgang vorgesehene Bauteil an dem Ring anliegt, um aus dieser Position dann in das Blech eingepresst zu werden. Durch den Sensor wird daher sichergestellt, dass das Bauteil sich vor dem Einpressvorgang an der gewünschten Position befindet und z.B. nicht weiter oben in der Hülse sich verkantet hat. Der Setzvorgang wird insbesondere nur dann ausgeführt, wenn der Sensor ein Bauteil detektiert.

Bei dem verwendeten Material für die Führungsstruktur handelt es sich insbesondere um ein verschleißfestes, elastisches Material. die Führungsstruktur besteht vorzugsweise vollständig aus diesem Material. In zweckdienlicher Ausgestaltung ist hierbei vorgesehen, dass die elastische Führungsstruktur aus einem Polyurethan-Elastomer besteht. Untersuchungen haben gezeigt, dass Polyurethan-Elastomere eine hohe Verschleißbeständigkeit aufweisen und den gewünschten Anforderungen standhalten können.

Insbesondere besteht die Führungsstruktur aus einem NDI-basierten Polyurethan-Elastomer. Speziell handelt es sich hier um ein Gieß-Elastomer. Unter "NDI-basiertem Polyurethan-Elastomer" wird ein gummielastischer Polyurethanwerkstoff verstanden, welcher auf Basis von NDI (Naphtylen-1,5-Diisocyanat) hergestellt wird. Unter NDI-basiertes Polyurethan wird also ein Polyurethan verstanden, welches durch eine Polyadditionsreaktion des Naphtylendiisocyanats (NDI) mit Polyfonen hergestellt ist. Ein Beispiel für einen derartigen gummielastischen Polyurethanwerkstoff ist der Werkstoff, welcher unter dem Markennamen "Vulkollan" vertrieben wird.

In besonders bevorzugter Ausgestaltung weist das Material der Führungsstruktur eine zellige Struktur nach Art eines geschäumten Materials auf. Unter zellige Struktur wird allgemein ein Material verstanden, bei denen einzelne Zellen durch Zellwände voneinander getrennt sind. Die Zellen weisen beispielsweise einen Innendurchmesser im Bereich von 0,1mm bis 3mm auf. Der Vorteil der zelligen Struktur ist in der guten Kompressibilität und der guten Elastizität zu sehen. Sie eignet sich daher besonderes für das Aufbringen der gewünschten Haltekraft auf das Bauteil beim Durchführen durch den Niederhalter.

Das Material der Führungsstruktur und damit die Führungsstruktur selbst weist vorzugsweise eine Dichte im Bereich von 250-400 kg/m³ auf. Die angegebene Dichte ist bei der Verwendung eines zelligen Materials die sogenannte Rohdichte oder auch das sogenannte Raumgewicht, d.h. die Dichte basierend auf dem Volumen inklusive der Zellen. Durch die geeignete Wahl der Dichte lässt sich die gewünschte Haltekraft geeignet einstellen.

Insgesamt zeichnet sich die Führungsstruktur in all ihren Ausführungsvarianten, speziell bei den Ausgestaltungen mit den Führungsleisten oder der ringförmigen Struktur durch seine sehr einfache Geometrie und auch einfache Herstellbarkeit aus. Speziell sind bei der Verwendung der Führungsstruktur keine elastischen Finger- oder Federelemente vorhanden, die das Fügeelement mit einer elastischen Kraft beaufschlagen. Vielmehr wird die elastische Haltekraft vorzugsweise ausschließlich durch eine Komprimierung des Materials der elastischen Führungsstruktur ausgeübt. Die Führungsstruktur weist üblicherweise einen Innendurchmesser auf, der zumindest etwas kleiner ist als eine Außenabmessung des Fügeelements. Beim Durchstoßen des Bauteils durch das Führungselement wird daher das Material der Führungsstruktur an der jeweiligen Position, an der sich das Bauteil aktuell befindet, in radialer Richtung, also senkrecht zur Axialrichtung, komprimiert.

Unter elastischem Material wird vorliegend daher insbesondere eine elastische Kompressibilität verstanden. Insbesondere erfolgt die Ausübung der Haltekraft ausschließlich durch Kompression. Das heißt, ein radiales Aufweiten der Führungsstruktur, also seiner Außenwandung, sodass in der aktuellen Position des Fügeelements ein Außenmaß der Führungsstruktur vergrößert werden würde, erfolgt vorzugsweise nicht.

Das Material weist dabei weiterhin eine ausreichende Rückstellkraft und eine kurze Relaxationszeit auf, sodass es nach erfolgtem Durchtritt des Bauteils wieder seine ursprüngliche Form annimmt, d.h. die Führungsstruktur nimmt seine ursprüngliche Wandstärke unmittelbar nach Durchtritt des Bauteils wieder ein. Unter unmittelbar wird eine Zeit im Bereich von maximal 1 bis 2 Sekunden verstanden. Dies ist erforderlich, um gewünschte hohe Taktraten beim automatischen Fügen und Setzen der Fügeelemente zu erzielen.

Die Führungsstruktur weist zweckdienlicherweise allgemein eine Länge, ein Innenmaß, speziell einen Innendurchmesser sowie eine Wandstärke auf. Insbesondere die Wandstärke ist über die gesamte Länge konstant. Vorzugsweise ist auch der Innendurchmesser über die gesamte Länge konstant. Bevorzugt ist die Wandstärke in Umfangsrichtung des Rohres konstant. Alternativ variiert die Wandstärke in Umfangsrichtung. In diesem Fall ist die Wandstärke durch den dicksten Bereich (in Umfangsrichtung betrachtet) der Wandung definiert.

Die Länge des Rohrs und des Führungselements beträgt typischerweise mehrere Zentimeter, beispielsweise 2 bis 8 cm und ist üblicherweise deutlich größer als die Länge des zu setzenden Fügeelements (jeweils in Axialrichtung betrachtet). Die Länge des Rohrs ist dabei insbesondere mehr als doppelt oder auch mehr als fünffach so lang wie die Länge des Fügeelements, bzw. des Kopfes im Falle eines Bolzens.

Die Wandstärke liegt vorzugsweise im Bereich von 2 bis 10 mm und insbesondere im Bereich von 2 bis 3 mm. Insbesondere in Verbindung mit der zelligen Struktur ist eine ausreichende Kompressibilität zur Erzeugung der gewünschten Haltekraft erreicht.

Vorzugsweise ist das Außenmaß des Fügelements um 0,5 mm bis 2 mm und insbesondere um 0,8 mm bis 1,2 mm größer als das Innenmaß der Führungsstruktur. Als Außenmaß wird jeweils eine maximale Außenabmessung des Bauteils und als Innenmaß eine minimale Abmessung (Abstand) des Innenraums der Führungsstruktur verstanden. Bei kreisrunden Geometrien ist dies jeweils der Durchmesser. Bei der Variante mit den Führungsleisten definieren diese mit ihren innenliegenden Seiten einen Innenkreis. Dessen Durchmesser bildet das Innenmaß. Die Abmessungen werden jeweils in einer Schnittebene senkrecht zur Axialrichtung betrachtet. Bei in Axialrichtung variierendem Außen - oder Innenmaß bezieht sich das angegebene Maß auf das in Axialrichtung betrachtet größte Außenmaß des Bauteils bzw. auf das minimale Innenmaß der Führungsstruktur.

In einer Ausgestaltung weist - speziell in der Variante als Rohr - die Führungsstruktur - im Querschnitt zur Axialrichtung betrachtet - eine von der Kreisform abweichende Innenkontur auf. Diese ist beispielsweise gewellt, polygonal und insbesondere trilobular ausgebildet. Dadurch liegt das Bauteil vorzugsweise nicht über seinen gesamten Umfang an der Innenwandung des Rohrs an, zumindest wird die Wandung des Rohres durch die profilierte Struktur über den Umfang betrachtet unterschiedlich komprimiert, d.h. hervorstehende Bereiche werden stärker komprimiert.

Vorzugsweise weist der Stempel das gleiche Außenmaß und vorzugsweise auch die gleiche Querschnittsgeometrie wie ein Kopfbereich des Bauteils auf, gegen den der Stempel verfährt. Dadurch ist eine möglichst großflächige Auflage des Stempels auf dem Bauteil sichergestellt.

In einer Ausführungsvariante ist die Führungsstruktur an ihrem oberen Ende aufgeweitet, sodass er in etwa einen konischen Einführtrichter für das Fügeelement ausbildet. Über ihre restliche Länge weist die insbesondere als Rohr ausgebildete Führungsstruktur vorzugsweise einen konstanten Innendurchmesser auf. In diesem Fall nimmt daher der Innendurchmesser in diesem Bereich zum Ende hin etwas zu. Dieser aufgeweitete Endbereich beträgt jedoch maximal 25% oder maximal 15% der Gesamtlänge des eingesetzten Rohrs.

Zweckdienlicherweise ist die Führungsstruktur an der Innenwandung der Hülse oder auch der Montagehülse stoffschlüssig befestigt. Dies erfolgt beispielsweise durch Kleben oder alternativ direkt bei der Ausbildung der Führungsstruktur, also beispielsweise bei einem Gießvorgang. Alternativ erfolgt das stoffschlüssige Verbinden durch Anvulkanisieren. Die Führungsstruktur und die Hülse / Montagehülse bilden insofern eine fest miteinander verbundene Baueinheit, die beispielsweise nicht zerstörungsfrei getrennt werden kann. Durch diese Verbindung wird die Führungsstruktur zuverlässig in der Hülse gehalten, auch bei einem Zurückziehen des Stempels nach einem Einpressvorgang.

Weiterhin weist die Hülse vorzugsweise einen oberen Haltekragen auf, welcher endseitig an der Hülse ausgebildet ist. Dieser Haltekragen ist dabei insbesondere nach Art einer Ringscheibe ausgebildet und ist senkrecht zur Axialrichtung orientiert. Er weist dabei nach außen, sodass im Querschnitt betrachtet die Hülse mit der darin einliegenden Führungsstruktur in etwa T-förmig ausgebildet ist. Der Kragen dient beispielsweise als Montagehilfe und dient beispielsweise zur Befestigung der Baueinheit, bestehend aus Hülse und Führungsstruktur. Die Führungsstruktur selbst weist vorzugsweise keinen Kragen auf. Alternativ kann die Führungsstruktur selbst ebenfalls einen Kragen aufweisen.

Gemäß einer bevorzugten Ausgestaltung bildet die Baueinheit bestehend aus der Hülse und der Führungsstruktur (und ggf. der Montagehülse) das Führungselement aus, welches in dem Niederhalter insbesondere passgenau einliegt. Bei dieser Ausführungsvariante ist daher eine koaxiale, konzentrische Anordnung der Baueinheit mit dem Niederhalter vorgesehen. Der Haltekragen dient insbesondere zum Aufliegen auf einer Oberseite des Niederhalters und ist beispielsweise zwischen dem Niederhalter und einer Gegenlagerplatte festgeklemmt. Die Baueinheit ermöglicht insbesondere einen einfachen Austausch, z.B. bei einem Verschleiß des Rohres.

In einer bevorzugten Ausgestaltung liegt die Führungsstruktur jedoch unmittelbar im Niederhalter ein oder auch mittelbar über die Montagehülse. Insofern bildet also der Niederhalter die Hülse.

Die Aufgabe wird gemäß der Erfindung weiterhin gelöst durch ein Führungselement für ein solches zuvor beschriebenes Verarbeitungswerkzeug, wobei das Führungselement eine Hülse, insbesondere Metallhülse mit einer darin angebrachten Führungsstruktur aus einem Elastomer aufweist.

Das Führungselement ist insgesamt ein Austausch- und Verschleißteil, welches als Austauschteil bei dem zuvor beschriebenen Verarbeitungswerkzeug eingesetzt ist. Die zuvor im Hinblick auf das Verarbeitungswerkzeug angeführten Vorteile und bevorzugten Ausgestaltungen sind sinngemäß auf das beanspruchte Führungselement zu übertragen.

Ausführungsbeispiele der Erfindung werden nachfolgend anhand der Figuren näher erläutert. Diese zeigen in teilweise vereinfachten Darstellungen:
- Fig. 1: eine ausschnittsweise Schnittdarstellung eines Verarbeitungswerkzeugs mit einem Führungselement, welches ein in einer Hülse einliegende elastische Führungsstruktur aufweist,
- Fig. 2: eine ausschnittsweise Querschnittsdarstellung eines Verarbeitungswerkzeugs, bei dem die elastische Führungsstruktur unmittelbar in einem Niederhalter befestigt ist,
- Fig. 3: eine Querschnittsdarstellung der Führungsstruktur gemäß einer ersten Ausführungsvariante,
- Fig. 4: eine Querschnittsdarstellung der Führungsstruktur gemäß einer zweiten Ausführungsvariante
- Fig. 5A-5E: Halbschnitte von verschiedenen Ausführungsvarianten, bei denen die Führungsstruktur als ein Ring ausgebildet ist,
- Fig. 6A-6C: Aufsichten auf unterschiedliche Varianten der Führungsstrukturen in einer rohr- oder ringförmigen Ausgestaltung,
- Fig. 7A-7B: Ansichten von unten auf eine Austrittsseite der Hülse mit einliegender Führungsstruktur gemäß den Fig. 5A, 5B sowie Fig. 5C, 5D,
- Fig. 8A-8D: Halbschnitte von verschiedenen Ausführungsvarianten, bei denen die Führungsstruktur durch mehrere axiale Führungsleisten gebildet ist und bei der sich die Führungsleisten über einen Großteil der axialen Länge der Hülse erstrecken,
- Fig. 9A-9C: Ansichten von oben auf eine Eintrittsseite der Hülse mit einliegender Führungsstruktur gemäß den Fig. 8A - 8C,
- Fig. 10A-10E: Halbschnitte von verschiedenen Ausführungsvarianten, bei denen die Führungsstruktur durch mehrere axiale Führungsleisten gebildet ist und bei der sich die Führungsleisten nur in einem unteren Bereich der Hülse über eine kurze Länge erstrecken, sowie
- Fig. 11: ein Halbschnitt einer Hülse mit einem Ring als Führungsstruktur und mit einem Sensor.

In den Figuren sind gleich wirkende Bauteile mit den gleichen Bezugszeichen versehen.

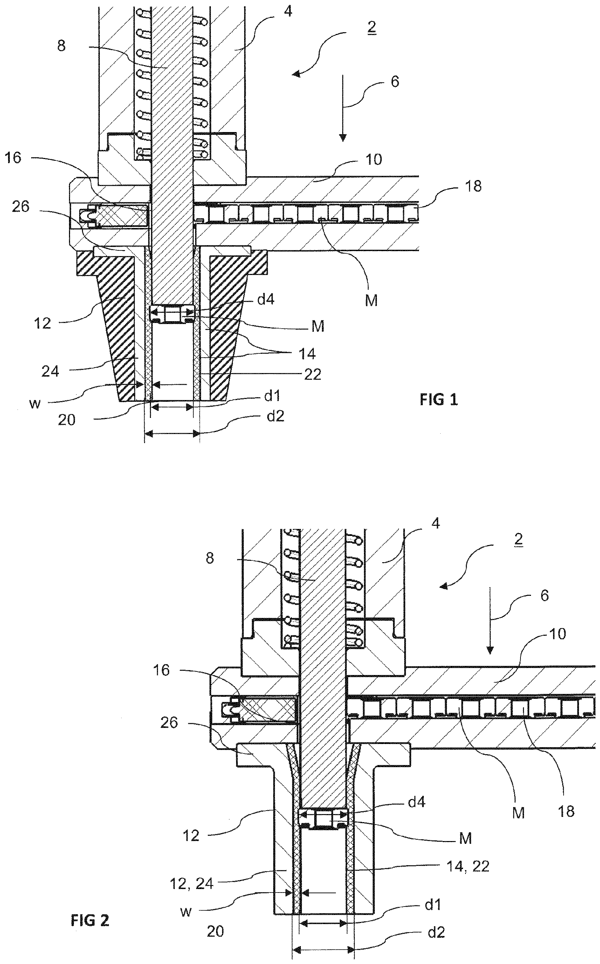

Die in den Fig. 1,2 ausschnittsweise dargestellten Verarbeitungswerkzeuge sind als Einpresswerkzeuge 2 ausgebildet und dienen zum Einpressen von Bauteilen M, nämlich insbesondere in den Figuren dargestellte Einpressmuttern oder auch Einpressbolzen in ein hier nicht näher dargestelltes Werkstück, welches beispielsweise ein ungelochtes oder vorgelochtes Blech ist.

Das Einpresswerkzeug 2 umfasst hierbei einen in einem Zylinder 4 in Einpress- oder Axialrichtung 6 verfahrbaren Stempel 8. Dieser ist in seiner oberen Ausgangsposition im Ausführungsbeispiel federkraftbeaufschlagt gehalten. Der Zylinder 4 ist an einer vorzugsweise plattenförmigen Zuführeinheit 10 befestigt. An deren Unterseite ist ein Niederhalter 12 mit darin eingesetztem Führungselement 14 befestigt.

Die zu verpressenden Bauteile M werden dem Einpresswerkzeug 2 aus einem Vorratsbehälter über die Zuführeinheit 10 einzelweise in eine Bereitstellungsposition 16 zugeführt. Im Ausführungsbeispiel umfasst die Zuführeinheit 10 hierzu einen Zuführkanal 18, in dem die Bauteile M aufgereiht werden und anschließend einzelweise in die Bereitstellungsposition 16 geschoben werden. In dieser befindet sich das jeweilige Bauteil M innerhalb eines Kanals, in dem es dann beim Setzvorgang vom Stempel 8 in Axialrichtung 6 verschoben wird. In dieser Bereitstellungsposition 16 wird das Bauteil M bevorzugt von einer Haltevorrichtung federnd gelagert, beispielsweise mittels Halteklauen gehalten. Diese Haltevorrichtung umfasst hierzu beispielsweise zumindest einen elastisch gelagerten Klinken- oder Greifarm. Der Klinkenarm ist hierzu vorzugsweise entgegen einer Federkraft schwenkbar gelagert. Der Klinkenarm weist eine spezielle Kontur auf, mit der das Bauteil M zumindest in Teilbereichen umgriffen wird, so dass eine spielfreie Positionierung des Bauteils M in der Bereitstellungsposition 16 gewährleistet ist.

Die Zuführeinheit 10 ist im Ausführungsbeispiel lateral angeordnet und der Zuführkanal 18 erstreckt sich senkrecht zur Axialrichtung 6 für eine seitliche Zuführung der Einpressmuttern M.

Beim Setz- oder Bearbeitungsvorgang wird das gesamte Einpresswerkzeug 2 in Axialrichtung 6 gegen das Blech verfahren, so dass der Niederhalter 12 das Blech gegen eine Auflage, insbesondere Matrize drückt. Der Stempel 8 wird zum Einpressen der Mutter M in das Blech in Axialrichtung 6 zwangsangetrieben gesteuert verfahren, beispielsweise hydraulisch, pneumatisch oder auch elektrisch. Hierbei drückt der Stempel 8 die Einpressmutter M aus der Bereitstellungsposition 16 heraus und durch das Führungselement 14 hindurch, bis das Bauteil M die eigentliche Verarbeitungsposition 20 am Ende des Niederhalters 12 erreicht. Die Verarbeitungsposition 20 ist daher durch das Ende des Niederhalters 12 erreicht und entspricht der Position, bei der das Bauteil M auf dem Werkstück zum Aufliegen kommt, bevor der eigentliche Einpressvorgang startet. Zum anschließenden Einpressen übt der Stempel 8 auf das Bauteil M eine definierte Einpresskraft aus, die üblicherweise zu einer Verformung des Bauteils M und/oder des Bleches führt.

Das Einpresswerkzeug 2 ist Bestandteil einer automatisierten Vorrichtung, so dass das sukzessive Einpressen einer Vielzahl von Bauteilen M automatisch erfolgt. Hierzu werden die einzelnen Bauteile automatisch dem Einpresswerkzeug 2 zugeführt, dieses wird automatisch mit Hilfe einer Steuereinrichtung betätigt und gegebenenfalls an eine definierte Position zum Einbringen des Bauteils in das Blech verfahren.

Beim Überführen des Bauteils M aus der Bereitstellungsposition 16 in die Verarbeitungsposition 20 wird diese durch das Führungselement 14 gepresst.

Das Führungselement 14 weist allgemein eine Führungsstruktur 22 aus einem elastomeren Material auf. Die Führungsstruktur 22 ist in einer Hülse 24 angeordnet. Und zwar liegt die Führungsstruktur 22 in einer bevorzugten Variante unmittelbar mit seinem Außenumfang an einer Innenwandung der Hülse 24 an. Die Hülse 24, zumindest die Innenwandung sowie zumindest in einigen Ausführungsvarianten auch die Führungsstruktur 22 weisen umlaufend die gleiche Querschnittsgeometrie auf und sind insbesondere kreisrund ausgebildet. Bevorzugt ist die Führungsstruktur 22 an der Innenwandung der Hülse 24 stoffschlüssig befestigt, insbesondere beispielsweise durch Ankleben des elastomeren Materials der vorzugsweise rohrförmigen Führungsstruktur 22 an dem Material der Hülse 24. Die Hülse 24 besteht vorzugsweise aus einem Metall, insbesondere Stahl.

Die beiden Ausführungsbeispiele gemäß den Fig. 1,2 unterscheiden sich zunächst darin, dass das Führungselement 14 bei der Ausführungsvariante gemäß der Fig. 1 durch eine Baueinheit, bestehend aus der Hülse 24 und der Führungsstruktur 22, gebildet ist. Diese gemeinsame, das Führungselement 14 bildende Baueinheit liegt im Niederhalter 12 ein. Das Führungselement 14 erstreckt sich bei den Varianten gemäß den Fig. 1,2 über die gesamte Länge des Niederhalters 12 (betrachtet in Axialrichtung 6). In gleicher Weise erstreckt sich auch die Führungsstruktur 22 über die gesamte Länge der Hülse 24 und damit auch des Niederhalters 12.

Für eine einfache Befestigung der das Führungselement 14 bildenden Baueinheit weist die Hülse 24 gemäß Fig. 1 an ihrem oberen Ende einen umlaufenden Befestigungskragen 26 auf. Dieser ist vorzugsweise zwischen dem Niederhalter 12 und einer Unterseite der Zuführeinheit 10 angeordnet, speziell eingeklemmt. Der Niederhalter 12 und/oder die Unterseite der Zuführeinheit 10 weisen beispielsweise eine Aussparung zur formschlüssigen Aufnahme des Befestigungskragens 26 auf. Im Unterschied zu der Ausführungsvariante gemäß der Fig. 1 ist bei der Fig. 2 die Führungsstruktur 22 unmittelbar an einer Innenwandung des Niederhalters 12 befestigt. In diesem Fall bildet daher der Niederhalter 12 zugleich auch die Hülse 24 aus.

In beiden Fällen ist also eine Hülse 24 vorgesehen, die die Führungsstruktur 22 umfangsseitig umgibt. Die Hülse 24 weist jeweils eine hohe Steifigkeit und Festigkeit auf, sodass sie im Vergleich zu der elastischen Führungsstruktur 22 nicht elastisch nachgiebig ausgebildet ist.

Beim Durchpressen des Bauteils M durch die Führungsstruktur 22 hindurch führt dies dazu, dass an einer jeweils aktuellen Position der Mutter M lediglich das Material der Führungsstruktur 22 elastisch komprimiert wird. Unmittelbar nach Durchstoßen des Bauteils M relaxiert das Material wieder und die Führungsstruktur 22 nimmt seine ursprüngliche Geometrie wieder ein. Die Führungsstruktur 22 weist entsprechend ein Innenmaß, insbesondere einen Innendurchmesser d1 auf, welcher geringfügig kleiner als ein Außendurchmesser bzw. eine maximale Außenabmessung d4 des Bauteils M ist. Die Führungsstruktur 22 weist weiterhin ein Außenmaß, insbesondere einen Außendurchmesser d2 auf. Der Stempel 8 wiederum ist möglichst passgenau innerhalb der Führungsstruktur 22 geführt, weist also vorzugsweise einen Außendurchmesser auf, welcher dem Innendurchmesser d1 der Führungsstruktur 22 angepasst ist. Vorzugsweise weist der Stempel 8 eine zum Bauteil M korrespondierende (kreisrunde) Stempelfläche auf, insbesondere also einen Außendurchmesser d4.

In den Ausführungsvarianten gemäß den Fig. 1 und 2 ist vorgesehen, dass die Führungsstruktur 22 an ihrem oberen Ende einen Einführtrichter oder eine konische Verbreiterung aufweist. Dies ist beispielsweise durch einen konischen Materialabtrag an der Innenseite der die Führungsstruktur 22 ausgebildet, wie dies in der Fig. 1 angedeutet ist. Alternativ ist die Führungsstruktur 22 insgesamt an seinem oberen Ende konisch aufgeweitet, wie dies in der Fig. 2 dargestellt ist. In diesem Fall weist die Hülse 24 korrespondierend hierzu ebenfalls eine konische Aufweitung aus.

Die Führungsstruktur 22 weist insgesamt eine Wandstärke w auf, die im Bereich von 2 bis 10 mm und insbesondere im Bereich von 2 bis 4 mm liegt. Die Wandstärke w ist über die gesamte Länge der Führungsstruktur 22 konstant.

Bei der Führungsstruktur 22 handelt es sich bei der Ausführungsvariante gemäß den Fig. 1 und 2 insgesamt um ein Rohr, also um ein hohlzylindrisches Element, welches allenfalls im oberen Bereich aufgeweitet ist. Bei einigen Ausführungsvarianten weist das Rohr eine von der Kreisform abweichende Innenkontur auf, ist jedoch vorzugsweise weiterhin als ein hohlzylindrisches Element mit einer Zylinder-Außenmantelfläche ausgebildet, die an der Hülse 24 anliegt.

Die Führungsstruktur 22 besteht in allen hier zuvor sowie nachfolgend beschriebenen Ausführungsvarianten aus einem hochelastischen, abriebfesten Material, speziell einem Polyurethan-Elastomer wie zuvor beschrieben.

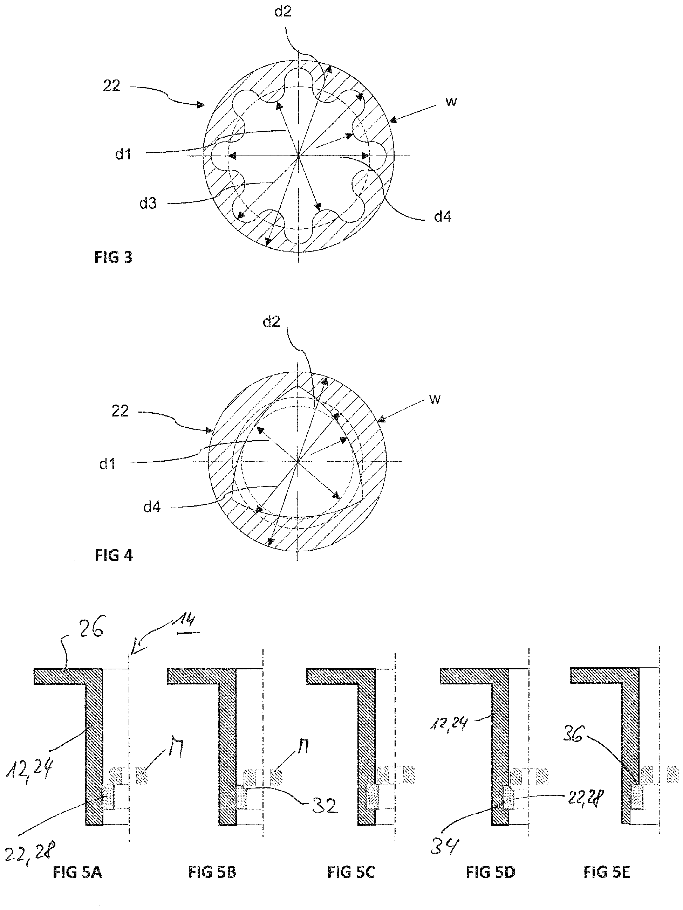

In den Figuren 3 und 4 sind zwei Ausführungsvarianten für mögliche (Querschnitts-) Ausgestaltungen der als Rohr ausgebildeten Führungsstruktur 22 dargestellt. Das Rohr weist jeweils eine von der Kreisform abweichende Innenkontur auf.

Alternativ zu den dargestellten Varianten weist das Rohr eine kreisförmige (Querschnitts-) Innenkontur mit dem Innendurchmesser d1 (Innenmaß) und dem Außendurchmesser d2 (Außenmaß) auf (vgl. hierzu Fig. 1, 2. Bei allen Varianten weist das Rohr in Längsrichtung 6 vorzugsweise eine gleichbleibende Querschnittskontur auf. Alternativ ist das Rohr - wie beispielsweise in Fig. 2 dargestellt - am oberen Ende etwas aufgeweitet und/oder mit einer Einführschräge versehen.

Durch die Ausgestaltung mit der unrunden, von der Kreisform abweichenden Innenkontur wird allgemein erreicht, dass das Bauteil M das elastische Rohr 22 nur bereichsweise (über den Umfang betrachtet) komprimiert. D.h. das Bauteil M liegt nur bereichsweise am elastischen Rohr 22 an. Allgemein weicht die Innenkontur des Rohres 22 von einer Außenkontur des Bauteils M ab. Der besondere Vorteil ist darin zu sehen, dass Material des Rohres 22 in Umfangsrichtung ausweichen kann. Insgesamt lässt sich durch diese Maßnahme die vom Führungselement 14 aufgebrachte Haltekraft zielgerichtet einstellen.

Bei der Variante gemäß der Fig. 3 ist die Innenkontur wellenförmig ausgebildet. Bei der Ausgestaltung gemäß der Fig. 4 ist die Innenkontur trilobular ausgebildet.

Der Innendurchmesser d1 definiert bei allen zuvor oder auch nachfolgend beschriebenen Varianten das Innenmaß der Führungsstruktur 22, welches kleiner als ein Außenmaß des Bauteils M ist. Das Außenmaß des Bauteils M lässt sich durch einen Bauteil-Außenkreis mit einem Bauteil-Außendurchmesser d4 definieren, der beispielhaft in den Fig. 3 und 4 eingezeichnet ist. Dieser liegt zwischen dem Innendurchmesser d1 und dem Außenkreis-Durchmesser d3, beispielsweise liegt er in der Mitte zwischen den beiden Durchmessern d1, d3. Die Führungsstruktur 22 weist weiterhin eine (maximale) Wandstärke w auf.

Bei dem in den Figuren 1 und 2 dargestellten ungeschlitzten Rohr als Führungsstruktur 22 ist die Befestigung des Rohres an der Hülse 24 mit einem gewissen Montageaufwand verbunden. Und diesen zu reduzieren sind die nachfolgend beschriebenen verschiedene Alternativen für die Führungsstruktur 22 vorgesehen. Die Führungsstruktur 22 ist dabei entweder ein- oder mehrteilig ausgebildet. Speziell weist sie ein oder mehrere streifen- oder leistenförmige Elemente auf und ist insbesondere durch diese gebildet. Die in den nachfolgend beschriebenen Varianten verwendete Hülse 24 ist vorzugsweise durch den Niederhalter 12 gebildet.

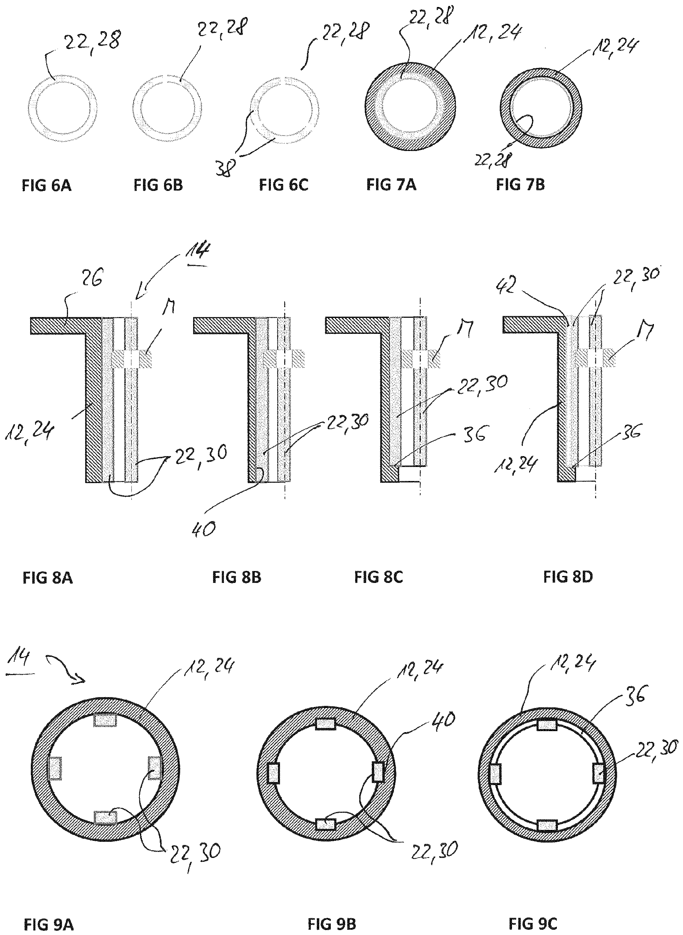

Gemäß einer ersten Variante ist die Führungsstruktur 22 durch eine ringförmige Struktur gebildet, nachfolgend kurz als Ring 28 bezeichnet. Diese Variante wird insbesondere im Zusammenhang mit den Figuren 5 und 6 näher erläutert. Bei dem Ring 28 handelt es sich insofern um ein kurzes Rohr, welches sich also in Axialrichtung 6 nur über ein kurzes Teilstück erstreckt.

Gemäß einer zweiten grundsätzlichen Variante ist die Führungsstruktur 22 durch mehrere sich jeweils in Axialrichtung 6 erstreckende Führungsleisten 30 gebildet. Diese Ausführungsvariante wird zu den Figuren 8-10 näher erläutert.

Die Figuren 5A bis 5E zeigen jeweils Halbschnittdarstellungen der Hülse 24 mit der als Ring 28 ausgebildeten elastischen Führungsstruktur 22. Die Hülse 24 ist als zylindrische Hülse mit einem radial abstehenden Befestigungskragen 26 ausgebildet. Im Bereich des Befestigungskragens 26 ist eine Einführseite definiert und am gegenüberliegenden Ende der Hülse ist eine Austrittsseite definiert, die durch ein unteres Ende der Hülse 24 gebildet ist. Der Ring 28 ist jeweils im unteren Drittel der Hülse 24 angeordnet. Der Ring 28 ist vom unteren Ende beabstandet, und zwar beispielsweise um zumindest eine halbe Ringbreite, betrachtet in Axialrichtung 6. Der maximale Abstand des Rings 28 zum unteren Ende liegt beim einfache und maximal beim zweifachen der in Axialrichtung 6 gemessenen Breite des Rings 28.

Bei der Ausführungsvariante gemäß der Figur 5A ist der Ring auf die zylindrische Innenwandung der Hülse 24 aufgebracht und mit dieser insbesondere verklebt. Gleiches gilt für der Ausführungsvariante gemäß der Figur 5B. Bei dieser ist der Ring 28 an seiner oberen Stirnseite abgeschrägt ausgebildet und bildet dort eine insbesondere konische Einführschräge 32 aus, die einer erleichtertes Eindringen des Bauteils M ermöglicht.

Durch diese Einführschräge wird die axiale Belastung des Rings 28 beim durchdrücken des Bauteils M im Vergleich zu der Variante gemäß der Figur 5A verringert.

Die Ausführungsvarianten gemäß den Figuren 5C und 5D unterscheiden sich von den zuvor beschriebenen Varianten dahingehend, dass die Hülse eine Ringnut 34 aufweist, in der der Ring 28 einliegt. Die Tiefe der Ringnut 34 in radialer Richtung ist dabei geringer als die entsprechende Tiefe des Materials des Rings 28, sodass dieser also in radialer Richtung in den Innenraum der Hülse 24 übersteht. Ein Innendurchmesser der Hülse 24 ist an den Außendurchmesser des Bauteils M angepasst, sodass diese über die gesamte Länge der Hülse 24 bereits etwas geführt ist und die Gefahr beispielsweise eines Verkippens reduziert ist.

Durch den im Vergleich zu den zuvor beschriebenen Varianten geringeren Innendurchmesser der Hülse 14, die bevorzugt zugleich den Niederhalter 12 bildet, ist insgesamt der Innendurchmesser des Niederhalters 12 auch geringer, was von Vorteil für den gesamten Pressvorgang ist.

Der besondere Vorteil dieser Ausführungsvariante mit der Ringnut 34 ist in der formschlüssigen Halterung des Rings 28 zu sehen, sowie weiterhin darin, dass der Ring 28 in die Hülse 24 radial hineinragt. Beide Maßnahmen führen dazu, dass die auf den Ring 28 einwirkenden Kräfte beim Durchpressen des Bauteils M gering sind bzw. durch den Formschluss gut abgefangen werden. Die geringe Belastung wird durch die Einführschräge 32 gemäß der Figur 5D noch verbessert. Die in der Figur 5D dargestellte Variante bildet eine bevorzugte Variante für die Ausbildung des Führungselements 14 speziell für das Verpressen einer Mutter.

Bei der Ausführungsvariante gemäß der Figur 5E ist schließlich anstelle der Ringnut 34 am unteren Ende der Hülse 24 ein Einstich vorgesehen, sodass ein Absatz 36 ausgebildet ist. Der Ring 28 kann daher von unten gegen diesen Absatz 36 eingepresst und geschoben werden.

In den Figuren 6A bis 6C sind unterschiedliche Ausführungsvarianten des Rings 28 dargestellt. Jede dieser Varianten kann dabei mit jeder der in den Figuren 5A bis 5E dargestellten Varianten kombiniert werden. Bei der Ausführungsvariante gemäß der Figur 6A ist der Ring 28 als ein geschlossener Ring ausgebildet. Bei der Figur 6B ist der Ring 28 als ein offener der Ring ausgebildet, welcher also einen (einzigen) Schlitz aufweist. In dieser Ausführungsvariante ist der Ring 28 daher nach Art eines Sprengrings ausgebildet. Diese geschlitzte oder offene Ausgestaltung erleichtert die Montage. Bei der Ausführungsvariante gemäß der Figur 6C ist der Ring 28 durch mehrere Ringsegmente gebildet, die auch als Rohrsegmente 38 bezeichnet werden. Im Ausführungsbeispiel sind insgesamt 3 Ringsegmente vorgesehen, die sich jeweils nahezu über 120° erstrecken. Auch diese segmentierte Ausgestaltung erleichtert die Montage.

Das in den Figuren 1 und 2 dargestellte Rohr bzw. der Schlauch, welcher sich über die gesamte Länge der Hülse 24 erstreckt, ist im Querschnitt betrachtet beispielsweise gemäß der Figur 6A als geschlossene Ringstruktur ausgebildet. Alternativ kann das Rohr auch die Ausgestaltung gemäß den Figuren 6B oder 6C annehmen d. h. als ein einfach oder auch ein mehrfach geschlitztes Rohr ausgebildet sein oder mehrere Rohrsegmente 38 aufweisen.

Anhand der Figuren 7A, 7B, die jeweils eine Ansicht von unten auf das Führungselement 14 zeigen und zwar auf die Ausführungsvarianten gemäß den Figuren 5A, 5B (Figur 7A) sowie auf die Ausführungsvarianten gemäß den Figuren 5C, 5D (Figur 7B) ist gut zu erkennen, dass bei der letztgenannten Variante, bei der der Ring 28 in der Ringnut 34 einliegt, der Ring 28 und damit das elastomere Material nur geringfügig in den Innenraum der Hülse 24 hinein ragt.

In den Figuren 8A bis 8D sind unterschiedliche Ausführungsvarianten dargestellt, bei denen die Führungsstruktur 22 durch mehrere sich in Axialrichtung 6 erstreckende Führungsleisten 30 ausgebildet ist. Die Führungsleisten 30 erstrecken sich dabei über die gesamte oder zumindest nahezu die gesamte Länge (mehr als 75 % der Länge) der Hülse 24. Wie aus den Ansichten gemäß den Figuren 9A bis 9C zu entnehmen ist, sind um den Umfang der Hülse 24 verteilt nur wenige, beispielsweise 3-6 und im Ausführungsbeispiel vier Führungsleisten 30 angeordnet.

Bei der Ausführungsvariante gemäß den Figur 8A und 9A sind die einzelnen Führungsleisten 30 auf die zylindrische Innenfläche der Hülse 24 aufgebracht. In allen Ausführungsvarianten der Figuren 8A bis 8D sind die Führungsleisten 30 gleichverteilt um den Umfang herum angeordnet. Sie sind als schmale Führungsleisten 30 ausgebildet, sodass der Abstand in Umfangsrichtung zwischen zwei benachbarten Führungsleisten 30 deutlich größer ist als die Breite einer jeweiligen Führungsleiste 30 in Umfangsrichtung.

Bei der Ausführungsvariante gemäß den Figuren 8B und 9B sind an der Innenwandung der Hülse 24 Nuten 40 ausgebildet, die sich in Axialrichtung 6 erstrecken und daher Längsnuten bilden. In diesen Nuten 40 liege die Führungsleisten 30 ein.

Bei der Ausführungsvariante gemäß der Figur 8C weist die Hülse 24 an ihrem unteren Ende einen Absatz 36 auf, der insbesondere als ein umlaufender Ringabsatz ausgebildet ist und auf den sich eine jeweilige Führungsleiste 30 mit ihrem unteren, vorderen Ende formschlüssigen abstützt. Dies bedeutet, dass im Bereich des Absatz 36 die Wandstärke der Hülse 26 im Vergleich zu dem vorhergehenden zylindrischen Abschnitt erhöht ist. Bei der Ausführungsvariante mit den Nuten 40 können ebenfalls in einer jeweiligen Nut 40 Absätze 36 vorgesehen sein.

Die Ausführungsvariante gemäß der Figur 8D zeigt beispielhaft ein Ausführungsbeispiel, bei dem ergänzend eine Montagehülse 42 vorgesehen ist. Bei dieser handelt sich insbesondere um eine Kunststoffhülse mit im Vergleich zu der Führungsstruktur 22 erhöhter Steifigkeit. Allgemein ist die Führungsstruktur 22 an dieser Montagehülse 42 befestigt und bildet mit dieser eine vorgefertigte Baueinheit. Speziell bei den hier bevorzugten Ausführungsvarianten, bei denen die Hülse 24 durch den Niederhalter 12 gebildet ist, wird hierdurch eine vorgefertigte Baueinheit als Austauschelement bereitgestellt. Die Montagehülse 42 ist dabei bevorzugt in die Hülse 24 eingepresst. Die Montagehülse 42 kann grundsätzlich mit allen hier beschriebenen Ausführungsvarianten kombiniert werden. Die Wandstärke der Montagehülse 42 ist vorzugsweise geringer als die der Hülse 24.

Die in der Figur 8D dargestellte Ausführungsvariante baut auf der Ausführungsvariante gemäß der Fig. 8C mit dem Absatz 36 auf. Die vorgefertigte Baueinheit mit der Montagehülse 42 und den an dieser innenseitig angebrachten Führungsleisten 30 stützt sich daher auf den ringförmigen Absatz 36 ab. Die Montagehülse 42 ist bevorzugt in allen Ausführungsvarianten als eine zylindrische Hülse ausgebildet.

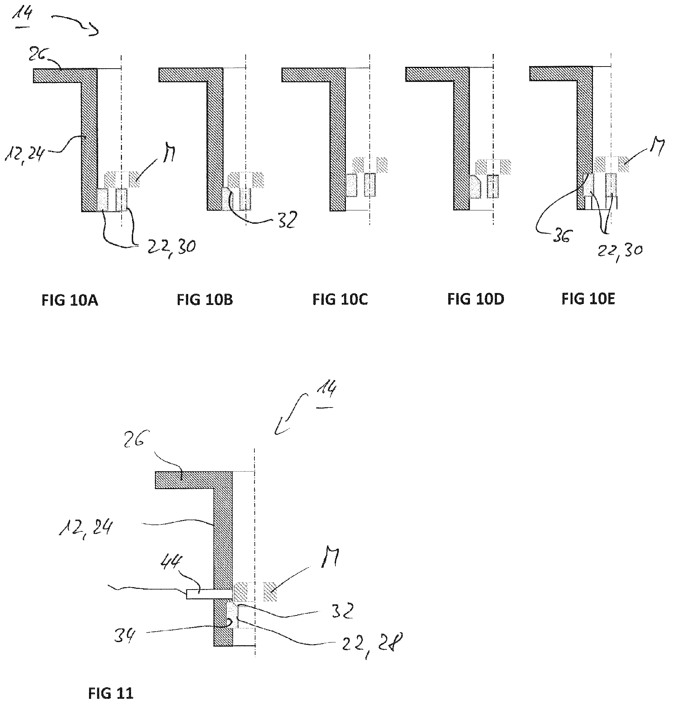

Alternativ zu den Ausgestaltungen gemäß den Figuren 8A bis 8D mit den Führungsleisten 30, die sich zumindest über nahezu die gesamte Länge der Hülse 24 erstreckt, sind in den Figuren 10A bis 10E Ausführungsvarianten mit Führungsleisten 30 dargestellt, die sich lediglich über eine kurze axiale Länge erstrecken. Die Führungsleisten 30 erstrecken sich dabei vorzugsweise lediglich über maximal 1/3 oder maximal ¼ oder auch maximal 10 % der Länge der Hülse 24.

Bei der Ausführungsvariante gemäß den Figuren 10A, 10B sind die Führungsleisten 30 am untersten Ende der Hülse 24 befestigt. Bei den Ausführungsvarianten gemäß den Figuren 10C, 10D sind die Führungsleisten 30 beabstandet von dem unteren Ende befestigt. Der Abstand ist vorzugsweise geringer als die axiale Länge der Führungsleisten 30.

Bei der Ausführungsvariante gemäß der Figur 10E ist schließlich wieder ein Einstich mit einem Absatz 36 vorgesehen, ähnlich wie bei der Ausführungsvariante gemäß der Figur 5E.

Die Verteilung der Führungsleisten 30 um den Umfang ist bei den Ausführungsvariante gemäß der Figuren 10A bis 10E in gleicher Weise wie bei den Varianten gemäß den Figuren 8A bis 8D vorgesehen.

Anhand der Figur 11 ist beispielhaft die zusätzliche Anordnung eines Sensors 44 dargestellt. Bei diesem handelt sich um einen Lagesensor, der detektiert, ob sich in dem Führungselement 14 eine Bauteil M befindet und vorzugsweise auch, ob diese sich in der korrekten Lage befindet. Der Sensor 44 ist im gezeigten Ausführungsbeispiel an der Hülse 12,24 angeordnet und insbesondere in eine Aufnahme oder durchgehende Bohrung in der Wandung der Hülse 24 eingesetzt.

Bei der Ausführungsvariante der Figur 11 wird als elastische Führungsstruktur 22 der Ring 28 verwendet, vorzugsweise in einer umlaufend geschlossenen Variante. Alternativ ist der Ring geschlitzt oder in Ringsegmente unterteilt. Der Sensor 44 ist unmittelbar oberhalb des Rings 28 angeordnet.

Bei den Ausgestaltungen mit dem Ring 28 in einem unteren Bereich fällt das Bauteil M allgemein durch die Hülse 12,24 nach unten in Richtung zum Ring 28 und wird von diesem quasi aufgefangen und gehalten, bevor der eigentliche Setzvorgang beginnt. Beim eigentlichen Setzvorgang wird dann das Bauteil M durch den Ring 28 hindurchgedrückt. Durch den Sensor 44 wird sichergestellt, dass das Bauteil M sich an der richtigen Position befindet und nicht etwa durch ein Verkanten in der Hülse 12, 24 oberhalb des Rings 28 stecken geblieben ist.

Bei allen Varianten ist vorzugsweise am oberen Bereich der Hülse 12, 24 speziell im Bereich der Bereitstellungsposition 16 ein weiterer Sensor angeordnet, der feststellt, ob sich ein Bauteil M in der Bereitstellungsposition 16 befindet. Bei den Ausführungsvarianten mit dem Ring 28 ist daher vorzugsweise ergänzend zu diesem weiteren Sensor der Sensor 44 an der Hülse 12, 24 angeordnet. Alternativ hierzu ist auf den weiteren Sensor verzichtet und es ist nur der Sensor 44 vorgesehen.

### Bezugszeichenliste

- 2: Einpresswerkzeug
- 4: Zylinder
- 6: Axialrichtung
- 8: Stempel
- 10: Zuführeinheit
- 12: Niederhalter
- 14: Führungselement
- 16: Bereitstellungsposition
- 18: Zuführkanal
- 20: Verarbeitungsposition
- 22: Führungsstruktur
- 24: Hülse
- 26: Befestigungskragen
- 28: Ring
- 30: Führungsleisten
- 32: Einführschräge
- 34: Ringnut
- 36: Absatz
- 38: Rohrsegmente
- 40: Nuten
- 42: Montagehülse
- 44: Sensor

- M: Einpressmutter
- w: Wandstärke

## Patentansprüche

1. Verarbeitungswerkzeug (2) zum Überführen eines Bauteils (M) aus einer Bereitstellungsposition (16) in eine Verarbeitungsposition (20), insbesondere Einpresswerkzeug (2) zum Einpressen eines Einpresselements wie eine Mutter (M) in ein Werkstück, mit einem Stempel (8), der das Bauteil (M) von der Bereitstellungsposition (16) in die Verarbeitungsposition (20) überführt, wobei ein Führungselement (14) angeordnet ist, in dem das Bauteil (M) von der Bereitstellungsposition (16) in die Verarbeitungsposition (20) geführt wird und das derart ausgebildet ist, dass es beim Verarbeitungsvorgang eine elastische Haltekraft auf das Bauteil (M) ausübt derart, dass beim Verarbeitungsvorgang der Stempel (8) das Bauteil entgegen der elastischen Haltekraft durch das Führungselement (14) presst,
**dadurch gekennzeichnet,**
**dass** das Führungselement (14) eine Hülse (12,24) aufweist, in der eine Führungsstruktur (22) aus einem Elastomer zum Führen und Halten des Bauteils (M) angeordnet ist.

2. Verarbeitungswerkzeug (2) nach dem vorhergehenden Anspruch, bei dem die Führungsstruktur (22) eine Anzahl von streifenförmigen Elementen (28,30) aufweist, und mehrere streifenförmige Elemente sich nach Art von Führungsleisten (30) in Axialrichtung (6) erstrecken oder zumindest ein streifenförmiges Element sich ringförmig in einer Umfangsrichtung erstreckt.

3. Verarbeitungswerkzeug (2) nach dem vorhergehenden Anspruch, bei dem die Hülse (12,24) eine Anzahl von Nuten (34,40) aufweist, in denen die Anzahl der streifenförmigen Elemente (28,30) angeordnet sind.

4. Verarbeitungswerkzeug (2) nach einem der vorhergehenden Ansprüche, bei dem die Führungsstruktur (22) auf eine Montagehülse (42) aufgebracht ist, die zwischen der Führungsstruktur (22) und der Hülse (12,24) einliegt und insbesondere aus Kunststoff besteht.

5. Verarbeitungswerkzeug (2) nach einem der vorhergehenden Ansprüche, bei dem die Hülse (12,24) endseitig zumindest einen Absatz (36) aufweist, an dem sich die Führungsleisten (30) abstützen.

6. Verarbeitungswerkzeug (2) nach Anspruch 1, bei dem die Führungsstruktur (22) als Rohr ausgebildet ist, wobei die Führungsstruktur (22) bevorzugt in Axialrichtung (6) geschlitzt ist oder mehrere Rohrsegmente (38) aufweist.

7. Verarbeitungswerkzeug (2) nach einem der vorhergehenden Ansprüche, bei dem die Führungsstruktur (22) als ein Ring (28) ausgebildet ist, welcher sich in Axialrichtung (6) nur über einen Teilbereich der Hülse (12,24) erstreckt, wobei der Ring (28) wahlweise als geschlossener Ring, als geschlitzter Ring oder als segmentierter Ring ausgebildet ist.

8. Verarbeitungswerkzeug (2) nach dem vorhergehenden Anspruch, bei dem der Ring (28) in einem unteren Teilbereich der Hülse (12,24) angeordnet ist und/oder in einer Ringnut (34) einliegt.

9. Verarbeitungswerkzeug (2) nach einem der vorhergehenden Ansprüche, bei dem ein Absatz (36) ausgebildet ist, an dem die Führungsstruktur (22) anliegt.

10. Verarbeitungswerkzeug (2) nach dem der vorhergehenden Ansprüche, wobei im Bereich der Hülse (12,24) ein Sensor (44) angeordnet ist, der insbesondere in der Wandung der Hülse (12,24) angeordnet ist und der zur Detektion eines in der Hülse (12,24) befindlichen Bauteils (M) ausgebildet ist.

11. Verarbeitungswerkzeug (2) nach einem der vorhergehenden Ansprüche, bei dem die Führungsstruktur (22) (22) aus einem Polyurethan-Elastomer, insbesondere aus einem NDI-basierten Polyurethan-Elastomer besteht.

12. Verarbeitungswerkzeug (2) nach einem der vorhergehenden Ansprüche, bei der die elastische Haltekraft ausschließlich durch eine Komprimierung der Führungsstruktur (22) (22) ausgeübt wird, wobei die Führungsstruktur (22) bevorzugt eine Wandstärke aufweist, die im Bereich zwischen 2 mm bis 10 mm liegt.

13. Verarbeitungswerkzeug (2) nach einem der vorhergehenden Ansprüche, bei der die Hülse (24) endseitig einen oberen Haltekragen (26) aufweist.

14. Verarbeitungswerkzeug (2) nach einem der vorhergehenden Ansprüche, bei dem die Führungsstruktur (22) unmittelbar in einem Niederhalter (12) einliegt und der Niederhalter (12) die Hülse (24) bildet.

15. Führungselement (14) für ein Verarbeitungswerkzeug (2) nach einem der vorhergehenden Ansprüche, welches eine Hülse (12,24) aufweist, in der eine Führungsstruktur (22) aus einem Elastomer angeordnet ist.
